# EUROPÄISCHE PATENTSCHRIFT

(11) **EP 3 652 110 B1**
(45) Veröffentlichungstag und Bekanntmachung des Hinweises auf die Patenterteilung: **28.01.2026**
(21) Anmeldenummer: 18739505.8
(22) Anmeldetag: 05.07.2018
(51) Int. Cl.: C01F 11/18, C01F 11/46, C04B 18/16, C01C 1/244, B09B 3/70

(54) **VERFAHREN ZUR CALCIUMSULFATENTFERNUNG AUS CALCIUMSULFATHALTIGEM BAUSCHUTT**
METHOD FOR REMOVING CALCIUM SULPHATE FROM CONSTRUCTION WASTE CONTAINING CALCIUM SULPHATE
PROCÉDÉ POUR ÉLIMINER LE SULFATE DE CALCIUM DANS DES DÉCHETS DE CONSTRUCTION CONTENANT DU SULFATE DE CALCIUM

(30) Priorität: 10.07.2017 DE 102017211730
(43) Veröffentlichungstag der Anmeldung: 20.05.2020
(73) Patentinhaber: Fraunhofer-Gesellschaft zur Förderung der angewandten Forschung e.V., 80686 München (DE)
(72) Erfinder: THOME, Volker, 83727 Schliersee (DE); LIESCH, Anna-Lena, 83627 Warngau (DE); SEDLBAUER, Klaus Peter, 83700 Rottach-Egern (DE)
(74) Vertreter: Friese Goeden Patentanwälte PartGmbB
(86) Internationale Anmeldenummer: PCT/EP2018/068273
(87) Internationale Veröffentlichungsnummer: WO 2019/011781

(56) Entgegenhaltungen:
- EP-A1- 0 189 866
- CN-B- 102 557 077
- CN-B- 103 145 148
- DE-A1- 10 312 803
- DE-A1- 19 812 262
- DE-A1- 3 217 394
- JP-A- 2001 000 947

## Beschreibung

Die Erfindung betrifft ein Verfahren zur Calciumsulfatentfernung und gegebenenfalls Rückgewinnung von Calciumsulfat aus Calciumsulfat-haltigem Bauschutt, bei dem die Calciumsulfat-Phasen (wie Gips, Anhydrit, Bassanit, AfM-Phasen, Ettringite und Thaumasit) in Calciumcarbonat umgewandelt werden. Mit diesem Verfahren ist es möglich, gipshaltige Bau- und Reststoffe derart aufzubereiten, dass deren Sulfatgehalt unterhalb der vorgegebenen Grenzwerte gesenkt werden kann, sodass sie nachfolgend in Recyclingbaustoffen eingesetzt werden können.

Als Baustoff in Wänden, Decken und Böden stecken heute schon bis zu 10 % Gips (CaSO₄·2H₂O) in der Gebäudesubstanz Deutschlands. Nach einem Abriss bereiten diese Stoffe in Recyclingbaustoffen (RC-Baustoffe) massive Probleme, denn es kann zu unerwünschten sekundären Treiberscheinungen kommen. Sie unterliegen somit sehr strengen Vorgaben (DIN 4226-100) für eine Wiederverwendung. So dürfen RC-Baustoffe des Typs 1 (Betonsplitt/Betonbrechsand) lediglich 0,2 Masseprozent Gips enthalten, und RC-Baustoffe des Typs 2 (Baubergssplitt/Baubergbrechsand) nur 0,5 Masseprozent. Werden diese Vorgaben nicht erfüllt, muss der Bauschutt deponiert werden. So fallen jährlich allein in Deutschland circa 5 Millionen Tonnen Bauschutt-Feinfraktionen mit Korngrößen kleiner 2 mm an, welche wegen der Gipsproblematik direkt auf die Deponie wandern. Aufgrund von chemischen Analysen des Bauschutts und von Modellwänden wird bisher davon ausgegangen, dass ein durchschnittlicher Gipsgehalt in Gebäuden und damit auch in Bauschutt von 3,6 Masseprozent realistisch ist. In Einzelfällen konnte jedoch ein Gipsanteil von bis zu 10 Masseprozent an der verbauten Baustoffmasse festgestellt werden. Selbst die Deponierung des Abbruchmaterials, speziell im Hinblick auf Porenbeton (bisweilen auch als Gasbeton bezeichnet) gestaltet sich zunehmend schwieriger, da dieser seit Anfang 2016 nicht mehr im herkömmlichen Bauschutt entsorgt werden darf, sondern aufgrund der hohen Sulfatauslaugungswerte als Abfall der Klasse I entsorgt werden muss.

Des Weiteren besteht auch bei anderen mineralischen Reststoffen das Problem der Sulfatbelastung, beispielsweise bei Stahlwerkschlacke oder Papierasche. Dadurch können diese nur in sehr begrenztem Maß in Baustoffen einsetzbar sein.

An sich ist Gips ein sehr gut rezyklierbares Baumaterial, jedoch wurde gipshaltiger Bauschutt bisher nur in sehr begrenzten Mengen wiederverwendet. Hierbei spielt vor allem die Sortenreinheit des Materials eine entscheidende Rolle. Durch präzises Vorsortieren des Materials oder durch einen gezielten Rückbau besteht die Möglichkeit Gipsmaterial von Ziegeln oder ähnlichen Mauerwerk zu trennen.

Bei Bauschutt wie beispielsweise in Porenbeton, Gipskartonplatten, Mörtel oder Beton bzw. in mineralischen Reststoffen in welchen die Sulfate nicht als Anhaftungen sondern chemisch in Mineralphasen gebunden vorliegen (z. B. in Ettringit oder AfM-Phasen) ist es bisher nicht möglich, diese herauszutrennen und somit ein sulfatfreies Material zu erzeugen.

Die Technik der Gipsentfernung mit Hilfe von Ammoniumcarbonat ist aus der Kunstrestauration bekannt. Hier wird Gips von Freskenoberflächen mittels Ammoniumcarbonattüchern entfernt. Ein solches Verfahren ist beispielsweise in der EP 0 189 866 A1 offenbart.

Die DE 198 12 262 A1 beschreibt Verfahren zur Aufbereitung von Dünnsäure, die in der Titanoxidherstellung anfällt, wobei hochwertiger Gips ausfällt.

Die JP 2001 000947 A wiederum betrifft die Behandlung von aus Calciumsulfat und Papier bestehenden Gipsplatten mit Ammoniak und Kohlendioxid aus Kompostanlagen.

Ebenfalls bekannt ist das sogenannte Merseburg-Verfahren zur Gewinnung von hochreinem Ammoniumsulfat, welches als Düngemittel dient, und die Herstellung von Calcit aus Ammoniakwasser, Gipsresten oder REA-Gips und Kohlenstoffdioxid. Ausgehend vom Stand der Technik liegt der Erfindung somit die Aufgabe zugrunde, ein Verfahren zur Sulfatentfernung und ggf. Rückgewinnung von Calciumsulfat aus mineralischen Reststoffen, insbesondere Bauschutt, bereitzustellen, wobei der Sulfatgehalt unterhalb vorgegebener Grenzwerte gesenkt werden kann, sodass der Bauschutt in Recyclingbaustoffen eingesetzt werden kann. Die Aufgabe wird erfindungsgemäß durch das Verfahren nach Anspruch 1 gelöst.

Erfindungsgemäß wird ein Verfahren zur Calciumsulfatentfernung aus Calciumsulfat-haltigem Reststoff vorgeschlagen, welches die folgenden Schritte umfasst:
a) Einwirken von Ammoniumcarbonat und/oder Ammoniumbicarbonat auf den Calciumsulfat-haltigen Reststoff in einem wässrigen Medium, sodass das Calciumsulfat durch eine Austauschreaktion in Calciumcarbonat umgewandelt wird, und
b) Abtrennen des wässrigen Mediums, wobei das wässrige Medium Ammoniumsulfat enthält.

Der als Edukt verwendete Reststoff ist ein ein Baustoff, ausgewählt aus Beton, Backsteine, Ziegel, Klinkersteine, Mörtelreste, Fliesen, Glasbausteine, Keramik, gipshaltigen Bauschutt und/oder Sand.

Diesem Verfahren zur Calciumsulfatentfernung liegt der Grundgedanke zugrunde, unter Einwirkung von Ammoniumcarbonat und/oder Ammoniumbicarbonat das in den Bauabfällen enthaltene Calciumsulfat (CaSO₄) in Calciumcarbonat (CaCO₃) umzuwandeln, wobei in dem wässrigen Medium Ammoniumsulfat verbleibt. Obwohl es aus dem Stand der Technik bekannt war, Gips von Freskenoberflächen mittels Ammoniumcarbonattüchern zu entfernen, war es vollkommen überraschend, dass dies auch bei dem wesentlich komplexeren und weniger homogenen Bauabfällen möglich ist, insbesondere da bei den Freskenoberflächen hauptsächlich oberflächlich anhaftender Gips entfernt wird. Besonders überraschend war dabei, dass das erfindungsgemäße Verfahren auch mit Ammoniumbicarbonat durchgeführt werden kann.

Zudem ist das erfindungsgemäße Verfahren als Recyclingkreislaufverfahren ausgestaltet, bei dem aus dem ammoniumsulfathaltigen wässrigen Medium Calciumsulfat zurückgewonnen wird.

Eine Ammoniumbicarbonatlösung kann entweder kommerziell erhalten oder in einfacher Weise durch Ansäuern einer Ammoniumcarbonatlösung mit CO₂ oder durch Einleiten von CO₂ in eine ammoniakalische Lösung hergestellt werden.

Unter "Calciumsulfat-haltigem Bauschutt" im Sinne der vorliegenden Erfindung wird jeder Bauschutt verstanden, der Calciumsulfat-haltige Mineralphasen, wie Gips, Anhydrit, Bassanit, AfM-Phasen, Ettringite und Thaumasit, aufweist.

Der Calciumsulfat-haltige Bauschutt umfasst mineralische Abfälle und Baumaterialien, ausgewählt aus Beton, Backsteine, Ziegel, Klinkersteine, Mörtelreste, Fliesen, Glasbausteine, Keramik oder Sand. Insbesondere kann es sich dabei um Beton, Mörtel, Porenbeton und/oder zerkleinerte Gipsbaustoffe sowie mineralische Rohstoffe handeln, in welchen die Sulfate chemisch in den Mineralphasen gebunden sind.

In einigen Ausführungsformen weist der Calciumsulfat-haltige Bauschutt Siebfraktionen mit einer Korngröße kleiner oder gleich 2 mm auf oder bestehen daraus. Es wurde gefunden, dass die Sulfatentfernung aus Bauschutt mit dem erfindungsgemäßen Verfahren am effektivsten in den Siebfraktionen kleiner 2 mm ist.

In einigen Ausführungsformen wird das Ammoniumcarbonat und/oder Ammoniumbicarbonat in mindestens stöchiometrischer Menge, bezogen auf den Calciumsulfatgehalt des Bauschutts, eingesetzt. Dazu kann in einem vorgeschaltenen Schritt der Sulfatgehalt der gipshaltigen Bauabfälle in an sich bekannter Weise bestimmt werden, um die stöchiometrische Menge Ammoniumcarbonat bzw. Ammoniumbicarbonat festzustellen. Um einen möglichst vollständigen Austausch von Sulfat- zu Carbonat-Ionen sicherzustellen, ist es günstig, die Menge von Ammoniumcarbonat bzw. Ammoniumbicarbonat in einem Überschuss bezogen auf die stöchiometrische Menge einzusetzen. Die Obergrenze ist dabei nicht kritisch, sie wird günstiger Weise so gewählt, dass zum einen kein unnötiges Ammoniumcarbonat bzw. Ammoniumbicarbonat eingesetzt und zum anderen aber eine zumindest nahezu vollständige Umsetzung sichergestellt wird.

Im erfindungsgemäßen Verfahren wird ein wässriges Medium eingesetzt. Als wässriges Medium wird dabei insbesondere ein Medium verstanden, das Wasser aufweist und in dem Ammoniumcarbonat bzw. Ammoniumbicarbonat in der für das erfindungsgemäße Verfahren erforderlichen Mengen gelöst werden kann. Als besonders günstiges wässriges Medium wird dabei Wasser eingesetzt, beispielsweise destilliertes Wasser.

Die Menge des wässrigen Mediums kann dabei so gewählt werden, dass zum einen Ammoniumcarbonat und Ammoniumbicarbonat in ausreichenden Mengen gelöst werden können und ferner der Bauschutt ausreichend bedeckt ist.

Im Schritt a) des erfindungsgemäßen Verfahrens wirkt das Ammoniumcarbonat bzw. Ammoniumbicarbonat auf den Calciumsulfat-haltigen Bauschutt ein, wobei dieses Einwirken in einem wässrigen Medium, insbesondere Wasser, durchgeführt wird. Dabei ist es nicht kritisch, in welcher Reihenfolge der Calciumssulfat-haltige Bauschutt, das Ammoniumcarbonat bzw. Ammoniumbicarbonat und das wässrige Medium zusammengegeben werden. Die Reihenfolge kann also beliebig gewählt werden.

Das Einwirken in Schritt a) kann in einer Ausführungsform der Erfindung über einen Zeitraum von etwa einer Stunde bis mehreren Tagen erfolgen. In anderen Ausführungsformen der Erfindung kann das Einwirken über einen Zeitraum von etwa 1 Stunde bis etwa 5 Tagen erfolgen. In wieder einer anderen Ausführungsform kann das Einwirken über etwa 12 Stunden bis etwa 3 Tagen erfolgen. In einer weiteren Ausführungsform kann das Einwirken über etwa 2 Tage bis etwa 5 Tage erfolgen. In nochmals einer anderen Ausführungsform kann das Einwirken über etwa 24 Stunden bis etwa 48 Stunden erfolgen. In diesem Zeitraum erfolgt eine vollständige Umsetzung von Calciumsulfat zu Calciumcarbonat. Das Einwirken kann in einigen Ausführungsformen der Erfindung bei Raumtemperatur erfolgen.

Um diese vollständige Umsetzung zu erleichtern ist es günstig, wenn im Schritt a) die im wässrigen Medium enthaltenen Komponenten durch Bewegung miteinander in Kontakt gebracht und vermischt werden können. Dies kann beispielsweise durch ein übliches Rühren oder Schütteln, wie es in Laboratorien und technischen Anlagen durchgeführt wird, erfolgen.

Im Schritt b) erfolgt das Abtrennen des wässrigen Mediums mit den darin gelösten Substanzen, insbesondere dem darin gelösten Ammoniumsulfat, das aus dem im Bauschutt enthaltenen Sulfat gebildet wird. In einigen Ausführungsformen kann dieses Abtrennen im Schritt b) durch Filtration erfolgen. Auf diese Weise wird ein Filtrat erhalten, welches das Ammoniumsulfat enthält. Ggf. kann nach dem Abtrennen des wässrigen Mediums der verbleibende Filterrückstand getrocknet werden.

Das beispielsweise durch Filtration abgetrennte, Ammoniumsulfat-haltige wässrige Medium wird dazu verwendet, daraus mit Hilfe von Calciumträgern, insbesondere Calciumcarbonat, Freikalk oder Portlandit, Calciumsulfat mit einem hohen Reinheitsgrad herzustellen. Bei derzeitigem Kenntnisstand wird davon ausgegangen, dass in einigen Jahren ein Mangel an Gips herrschen wird. Beispielsweise ist davon auszugehen, dass der aus der Rauchgasentschwefelung gewonnene Gips als Gipsquelle in nicht allzu ferner Zukunft entfallen wird, da die Stein- und Braunkohlegewinnung wohl zurückgedrängt werden wird. Durch die Rückgewinnung von Gips aus dem Ammoniumsulfat-haltigen wässrigen Medium kann somit eine weitere in Zukunft wohl benötigte Gipsquelle erschlossen werden. Ferner ist zu beachten, dass durch diesen zusätzlichen Rückgewinnungsschritt von Gips aus dem Ammoniumsulfat-haltigen wässrigen Medium die Anwendung des erfindungsgemäßen Verfahrens auf Calciumsulfat-haltige Bauabfälle wie Gipskartonplatten oder Porenbeton wirtschaftlich besonders rentabel wird.

Ergänzend dazu kann ein Teil des Ammoniumsulfat-haltigen wässrigen Mediums direkt weiterverwendet werden, um daraus Düngmittel herzustellen, beispielsweise nach dem Merseburg-Verfahren.

Die Rückgewinnung von Gips kann in einer Ausführungsform dadurch ermöglicht werden, dass einer der vorstehenden Calciumträger zum Ammoniumsulfat-haltigen wässrigen Medium zugegeben und die Temperatur erhöht wird, beispielsweise auf eine Temperatur von etwa 58 °C bis etwa 100 °C. Dabei fällt Gips aus der Lösung aus und das in der Lösung verbleibende Ammoniumcarbonat zersetzt sich wieder in die Gase Ammoniak und Kohlendioxid. Diese können in einer wässrigen Lösung aufgefangen und dem Prozess in Schritt a) zugeführt werden. Alternativ kann zu dem Ammoniumsulfat-haltigen wässrigen Medium, das den Calciumträger aufweist, Schwefelsäure zugesetzt werden, um CO₂ auszutreiben und den im Calciumträger enthaltenen Calciumanteil in Gips umzuwandeln. Dabei erhält man eine reine Ammoniumsulfatlösung ohne eine wie oben beschriebene thermische Behandlung.

Zudem kann eine zusätzliche Behandlung (Ansäuern) der Lösung sicherstellen, dass das ausgefällte Calciumsulfat das von Eurogypsum empfohlene Qualitätskriterium von < 1,2 Gew.-% CaCO₃ erfüllt.

Aufgrund der vorliegenden Erfindung ist es also möglich, Calciumsulfat-haltige Bau- und Reststoffe derart aufzubereiten, dass der Sulfatgehalt unterhalb der vorgegebenen Grenzwerte gesenkt werden kann. Dies ist eine Grundvoraussetzung, dass Bauabfälle überhaupt erst wieder in Recyclingbaustoffen eingesetzt werden dürfen. Durch das erfindungsgemäße Verfahren werden daher Deponieflächen geschont, Deponiekosten gesenkt sowie die Ressourceneffizienz gesteigert.

Insbesondere ist es günstig, eine ammoniakalische Lösung, d. h. eine Ammoniumcarbonat- und/oder Ammoniumbicarbonat-Lösung einzusetzen, um die Austauschreaktion zwischen dem Sulfat und dem Carbonation zu bewirken, ohne Calcium aus dem Baustoffgefüge zu lösen.

Die technischen Anwendungsgebiete des erfindungsgemäßen Verfahrens liegen in der Recycling- und Aufbereitungsindustrie, da durch die oben beschriebene Methode große Mengen an sulfathaltigen Bauschutt und mineralischen Reststoffen aufbereitet werden können.

Die behandelten Reststoffe können anschließend Verwendung in RC-Baustoffen finden. Da durch den Prozess Ammoniumsulfat gewonnen wird, kann dieses zum einen als Düngemittel verwendet werden und zum anderen wird die entstandene Ammoniumsulfatlösung mit einem Calciumträger, insbesondere Calcit, behandelt, wodurch reines Calciumsulfat gewonnen wird. Dadurch ist möglich, dass der Recyclingkreislauf von gipshaltigen mineralischen Rest- und Baustoffen sich schließt.

Nachfolgend soll die Erfindung anhand von Figuren und Ausführungsbeispielen ohne Beschränkung des allgemeinen Erfindungsgedankens erläutert werden. Dabei zeigt
Figur 1 ein Röntgenbeugungsdiagramm einer unbehandelten Gipsprobe, wie sie in den Beispielen 4 und 5 als Ausgangsmaterial eingesetzt wurde.
Figur 2 zeigt ein Röntgenbeugungsdiagramm einer mit Ammoniumcarbonat behandelten Gipsprobe, wie sie in Beispiel 4 erhalten wurde.
Figur 3 zeigt ein Röntgenbeugungsdiagramm einer mit Ammoniumbicarbonat behandelten Probe, wie sie in Beispiel 5 erhalten wurde

### Beispiele

### Beispiel 1:

Es wurden 20 g Mörtel < 2 mm abgewogen und mit 10 g Ammoniumcarbonat versetzt und beides in einen Schüttelkolben überführt. Dieser wurde mit 800 ml Wasser aufgefüllt und auf einer Schüttelplatte befestigt. Die Schüttelzeit betrug einen Tag.

### Beispiel 2:

Es wurden 15 g Porenbetonbruch < 2 mm abgewogen und mit 0,6 g Ammoniumcarbonat versetzt und beides in einen Schüttelkolben überführt. Dieser wurde mit 800 ml Wasser aufgefüllt und auf einer Schüttelplatte befestigt. Die Schüttelzeit betrug fünf Tage.

### Beispiel 3:

Es wurden 15 g Porenbetonbruch < 2 mm abgewogen und mit 0,6 g Ammoniumbicarbonat versetzt und beides in einen Schüttelkolben überführt. Dieser wurde mit 800 ml Wasser aufgefüllt und auf einer Schüttelplatte befestigt. Die Schüttelzeit betrug fünf Tage.

### Beispiel 4:

Es wurden 20 g zerkleinerter Gipsbaustoff abgewogen und mit 15 g Ammoniumcarbonat vermengt. Beides wurde in einen Schüttelkolben überführt und auf einer Schüttelplatte befestigt. Der Kolben wurde mit 800 ml destilliertem Wasser aufgefüllt und 6 Stunden geschüttelt.

### Beispiel 5:

Es wurden 20 g zerkleinerter Gipsbaustoff abgewogen und mit 300 g Ammoniumbicarbonat vermengt. Beides wurde in einen Schüttelkolben überführt und auf einer Schüttelplatte befestigt. Der Kolben wurde mit 800 ml destilliertem Wasser aufgefüllt und einen Tag lang geschüttelt.

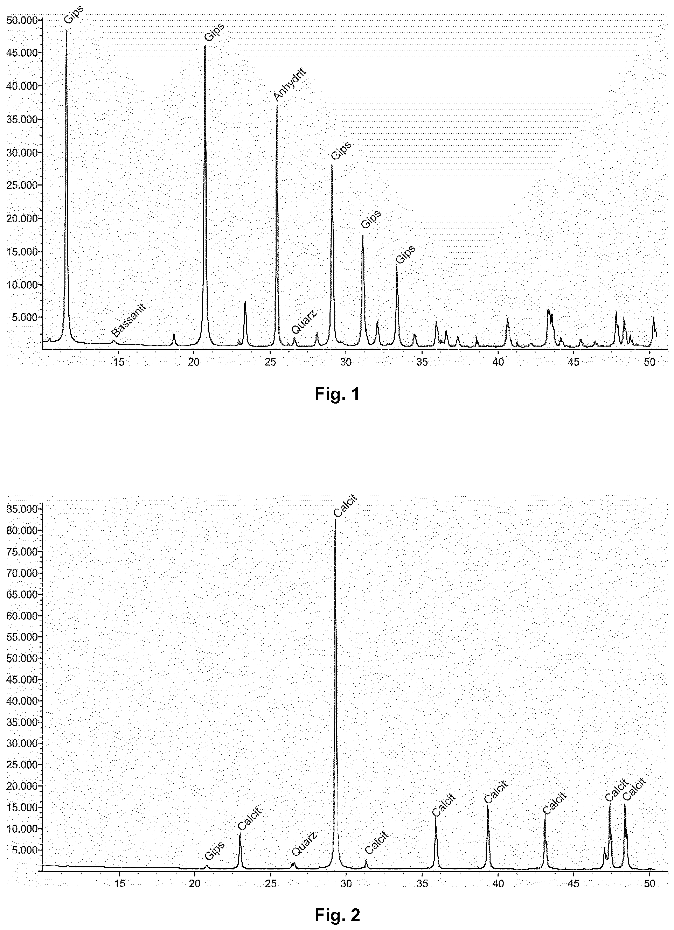

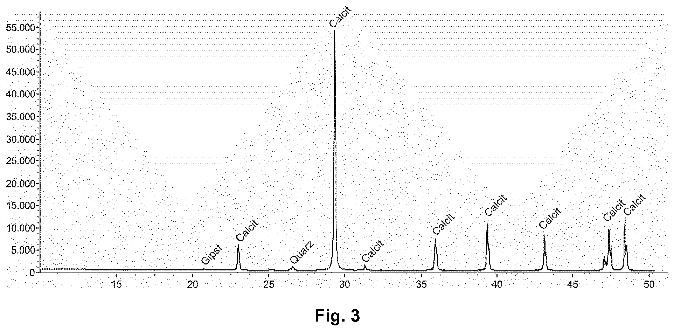

In Figur 1 ist ein Röntgenbeugungsdiagramm einer unbehandelten Gipsprobe, wie sie in den Beispielen 4 und 5 als Ausgangsmaterial eingesetzt wurden, gezeigt. Es ist deutlich zu erkennen, dass diese Probe einen hohen Gipsanteil enthält. Eine solche Probe wurde mit Ammoniumcarbonat (vgl**.** Figur 2, Beispiel 4) sowie Ammoniumbicarbonat (vgl. Figur 3, Beispiel 5) behandelt.

Es konnte nachgewiesen werden, dass der Gips im Bauschutt fast vollständig durch eine Austauschreaktion in Calcit umgewandelt werden konnte, und zwar sowohl wenn eine Ammoniumcarbonat- als auch eine Ammoniumbicarbonat-Lösung verwendet wurde.

Selbstverständlich ist die Erfindung nicht auf die in den Figuren und Beispielen dargestellten Ausführungsformen zu beschränken. Die vorstehende Beschreibung ist daher nicht als beschränkend sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Merkmale aus unterschiedlichen Ausführungsformen der Erfindung können jederzeit kombiniert werden, um so weitere Ausführungsformen der Erfindung zu erhalten.

## Patentansprüche

1. Recyclingkreislaufverfahren für gipshaltige mineralische Reststoffe, umfassend die Schritte:
a) Einwirken von Ammoniumcarbonat und/oder Ammoniumbicarbonat auf den Reststoff in einem wässrigen Medium, sodass das Calciumsulfat in Calciumcarbonat umgewandelt wird, und
b) Abtrennen des wässrigen Mediums, wobei das wässrige Medium Ammoniumsulfat enthält, und
c) Rückgewinnen von Calciumsulfat aus dem Ammoniumsulfat-haltigem wässrigen Medium,
**dadurch gekennzeichnet, dass** der Reststoff ein Baustoff ist, ausgewählt aus Beton, Backsteine, Ziegel, Klinkersteine, Mörtelreste, Fliesen, Glasbausteine, Keramik, gipshaltigen Bauschutt und/oder Sand.

2. Verfahren nach Anspruch 1, **dadurch gekennzeichnet, dass** der Reststoff Siebfraktionen mit einer Korngröße kleiner oder gleich etwa 2 mm enthält oder daraus besteht.

3. Verfahren nach einem der Ansprüche 1 oder 2, **dadurch gekennzeichnet, dass** das Ammoniumcarbonat und/oder Ammoniumbicarbonat in mindestens stöchiometrischer Menge zum Calciumsulfatgehalt des Bauschutts eingesetzt wird.

4. Verfahren nach einem der Ansprüche 1 bis 3, **dadurch gekennzeichnet, dass** als wässriges Medium Wasser eingesetzt wird.

5. Verfahren nach einem der Ansprüche 1 bis 4, **dadurch gekennzeichnet, dass** das Einwirken in Schritt a) über einen Zeitraum von etwa 1 Stunde bis etwa 5 Tagen oder von etwa 12 Stunden bis etwa 3 Tagen oder von etwa 2 Tagen bis etwa 5 Tagen oder von etwa 24 Stunden bis etwa 48 Stunden erfolgt.

6. Verfahren nach einem der Ansprüche 1 bis 5, wobei das Abtrennen in Schritt b) durch Filtration erfolgt.

7. Verfahren nach einem der Ansprüche 1 bis 6, **dadurch gekennzeichnet, dass** das Rückgewinnen dadurch erfolgt, dass ein Calciumträger zu dem Ammoniumsulfat-haltigen wässrigen Medium gegeben und die so erhaltene Mischung auf eine Temperatur von etwa 58 °C bis etwa 100 °C gebracht wird.

8. Verfahren nach einem der Ansprüche 1 bis 6, **dadurch gekennzeichnet, dass** das Rückgewinnen dadurch erfolgt, dass ein Calciumträger zu dem Ammoniumsulfat-haltigen wässrigen Medium gegeben und zu der so erhaltenen Mischung Schwefelsäure zugegeben wird.

9. Verfahren nach einem der Ansprüche 7 oder 8, **dadurch gekennzeichnet, dass** als Calciumträger Calcit, Freikalk, Portlandit und/oder eine Mischung von mindestens zwei dieser Verbindungen eingesetzt wird.

## Claims

1. Recycling circulation method for mineral waste materials containing gypsum, comprising the steps:
a) allowing ammonium carbonate and/or ammonium bicarbonate to act on the waste material in an aqueous medium so that the calcium sulfate is converted into calcium carbonate, and
b) separating the aqueous medium, the aqueous medium containing ammonium sulfate, and
c) recovering calcium sulfate from the aqueous medium containing ammonium sulfate,
**characterized in that** the waste material is a construction material that is selected from concrete, building bricks, bricks or tiles, clinker bricks, mortar waste, tiles, glass bricks, ceramics, construction waste containing gypsum, and/or sand.

2. Method according to claim 1, **characterized in that** the waste material contains or consists of sieve fractions having a grain size smaller than or equal to about 2 mm.

3. Method according to any one of claims 1 or 2, **characterized in that** the ammonium carbonate and/or ammonium bicarbonate is used in at least stoichiometric quantity relative to the calcium sulfate content of the construction waste.

4. Method according to any one of claims 1 to 3, **characterized in that** water is used as an aqueous medium.

5. Method according to any one of claims 1 to 4, **characterized in that** the action in step a) takes place over a period from about 1 hour to about 5 days or from about 12 hours to about 3 days or from about 2 days to about 5 days or from about 24 hours to about 48 hours.

6. Method according to any one of claims 1 to 5, wherein the separation in step b) is carried out by filtration.

7. Method according to any one of claims 1 to 6, **characterized in that** the recovery is carried out by adding a calcium carrier to the aqueous medium containing ammonium sulfate and by bringing the resulting mixture to a temperature from about 58°C to about 100°C.

8. Method according to any one of claims 1 to 6, **characterized in that** the recovery is carried out by adding a calcium carrier to the aqueous medium containing ammonium sulfate and by adding sulfuric acid to the resulting mixture.

9. Method according to any one of claims 7 or 8, **characterized in that** calcite, quicklime or free lime, portlandite and/or a mixture of at least two of these compounds is used as the calcium carrier.

## Revendications

1. Procédé de circuit de recyclage de résidus minéraux contenant du gypse, comprenant les étapes consistant à :
a) faire agir du carbonate d'ammonium et/ou du bicarbonate d'ammonium sur le résidu dans un milieu aqueux, de manière à transformer le sulfate de calcium en carbonate de calcium, et
b) séparer le milieu aqueux, le milieu aqueux contenant du sulfate d'ammonium, et
c) récupérer le sulfate de calcium à partir du milieu aqueux contenant du sulfate d'ammonium,
**caractérisé en ce que** le résidu est un matériau de construction choisi parmi le béton, les briques, les tuiles, les briques réfractaires, les résidus de mortier, les carreaux, les briques de verre, la céramique, les gravats contenant du gypse, et/ou le sable.

2. Procédé selon la revendication 1, **caractérisé en ce que** le résidu contient ou est constitué de fractions tamisées ayant une granulométrie inférieure ou égale à environ 2 mm.

3. Procédé selon l'une des revendications 1 ou 2, **caractérisé en ce que** le carbonate d'ammonium et/ou le bicarbonate d'ammonium est utilisé en quantité au moins stœchiométrique par rapport à la teneur en sulfate de calcium des gravats.

4. Procédé selon l'une des revendications 1 à 3, **caractérisé en ce que** l'on utilise de l'eau en tant que milieu aqueux.

5. Procédé selon l'une des revendications 1 à 4,
**caractérisé en ce que** l'action à l'étape a) s'effectue pendant une période d'environ 1 heure à environ 5 jours ou d'environ 12 heures à environ 3 jours ou d'environ 2 jours à environ 5 jours ou d'environ 24 heures à environ 48 heures.

6. Procédé selon l'une des revendications 1 à 5, dans lequel la séparation à l'étape b) s'effectue par filtration.

7. Procédé selon l'une des revendications 1 à 6, **caractérisé en ce que** la récupération s'effectue en ajoutant un support de calcium au milieu aqueux contenant du sulfate d'ammonium et en portant le mélange ainsi obtenu à une température d'environ 58 °C à environ 100 °C.

8. Procédé selon l'une des revendications 1 à 6, **caractérisé en ce que** la récupération s'effectue en ajoutant un support de calcium au milieu aqueux contenant du sulfate d'ammonium et en ajoutant de l'acide sulfurique au mélange ainsi obtenu.

9. Procédé selon l'une des revendications 7 ou 8, **caractérisé en ce que** l'on utilise comme porteur de calcium de la calcite, de la chaux vive, de la portlandite et/ou un mélange d'au moins deux de ces composés.
